## Europäisches Patentamt
## European Patent Office
## Office européen des brevets

(19)

(11) Publication number: **0 005 310**
B1

(12) **EUROPEAN PATENT SPECIFICATION**

(45) Date of publication of patent specification: **30.09.81**

(21) Application number: **79300317.9**

(22) Date of filing: **01.03.79**

(51) Int. Cl.³: **C 07 F 9/20, A 01 N 57/12, C 10 M 1/48, C 10 M 3/42, C 10 M 5/24, C 10 M 7/46**

(54) **Process for preparing dialkylphosphorochloridothioates, the use of the so prepared compounds as intermediates, and the use of some of the final products as insecticides**

(30) Priority: **02.03.78 US 882782**

(43) Date of publication of application:
**14.11.79 Bulletin 79/23**

(45) Publication of the grant of the European patent:
**30.09.81 Bulletin 81/39**

(84) Designated Contracting States:
**BE DE FR GB**

(56) References cited:
**US - A - 3 356 774**
**US - A - 3 502 750**
**US - A - 3 836 610**
**US - A - 3 856 898**
**US - A - 4 025 586**

(73) Proprietor: **ETHYL CORPORATION**
**330 South Fourth Street P.O. Box 2189**
**Richmond Virginia 23219 (US)**

(72) Inventor: **Anderson, Alfred Pierre**
**Route 1 Box 271**
**Gonzales Louisiana 70737 (US)**
Inventor: **Wilson, Riley Woodrow**
**11903 N. Oakhills Parkway**
**Baton Rouge Louisiana 70810 (US)**
Inventor: **Nelson, Marshall Budd**
**4223 Scaborough Drive**
**Baton Rouge Louisiana 70814 (US)**

(74) Representative: **Bizley, Richard Edward, et al**
**BOULT, WADE & TENNANT**
**27 Furnival Street**
**London EC4A 1PQ (GB)**

Courier Press, Leamington Spa, England.

# Process for preparing dialkylphosphorochloridothioates, the use of the so prepared compounds as intermediates, and the use of some of the final products as insecticides

This invention relates to a process for treatment and separation of a mixture comprising certain O,O-dialkyl phosphoro-chloridothioates and sulfur. The O,O-dialkyl phosphorochloridothioates are valuable intermediates, for instance, in the preparation of insecticides. Thus, for instance, O,O-diethyl thiophosphoryl chloride is an intermediate in the synthesis of an insecticide known as parathion, and O,O-dimethyl thiophosphoryl chloride is an intermediate in the synthesis of an insecticide called methyl parathion.

Several methods have been used for the synthesis of the esters of phosphorochlorido-thioic acid including one-step and two-step methods. In the one-step process, phosphorus pentasulfide, alcohol and chlorine are reacted to prepare the ester corresponding to the alcohol and then the solvent is removed and the product distilled.

In the two-step process, the first process step reacts phosphorus pentasulfide with an alcohol, e.g. with ethanol so as to form O,O-diethyl dithiophosphoric acid and hydrogen sulfide, and in a second process step the isolated product, e.g. O,O-diethyl dithiophosphoric acid, is chlorinated in an appropriate solvent with chlorine gas, e.g. resulting in the formation of O,O-diethyl thiophosphoric acid chloride.

Conventionally, the alkyl groups in the dialkyl phosphorochloridothioates have from 1 to 8 carbon atoms and are generally selected from methyl, ethyl, isopropyl, butyl, sec.-butyl, t-butyl, and the like, up to n-octyl and isomers thereof.

However, each of the conventional one-step and two-step processes produces sulfur in some form which must be separated from the product. Several solutions to the sulfur problem have been proposed in the prior art.

In one prior art process, the product is simply distilled under reduced pressure from the reaction vessel. The sump temperature apparently increases to about 150°C during distillation, and upon cooling after terminating distillation the liquid sump phase solidifies and consists essentially of elementary sulfur (U.S. Patent No. 3,356,774). In another patent disclosing a one-step process, the reaction mixture is treated with hydrogen sulfide to convert sulfur monochloride formed during the reaction of chlorine with a dialkyl dithiophosphoric acid ester. When the hydrogen sulfide treatment is carried out at relatively low temperature, a precipitate of sulfur is obtained with practically no by-products. Then, by distilling under vacuum and washing the distillate with water, the diesters of phosphoro-chloridothioic acid are said to be obtained in very high yield and in a very high degree of purity (U.S. Patent No. 3,502,750). In another prior art process using a two-stage chlorination reaction technique, the reaction mixture is chlorinated and then established and maintained at a temperature in the range of 85° to 110°C until it is substantially free of sulfur monochloride and the relatively thermal unstable sulfur that forms preferably becomes more thermally stable so that the product dialkyl thiophosphoryl chloride can be readily and safely removed from the mixture thereof with sulfur by distillation (U.S. Patent No. 3,836,610). Also, the chlorination-heat treating process can be conducted in a two-stage operation employing first a high temperature to solubilize sulfur, followed by a low temperature to precipitate sulfur from solution. After the high temperature range is established and maintained so that sulfur monochloride is changed to a thermally stable condition, preferably to sulfur with the sulfur going into solution without substantial decomposition of the phosphoridothioates, the resulting solution is then established at a temperature at which the dissolved sulfur crystallizes, precipitates from solution and is then separated from the solution by settlement, e.g., using filtration, decantation, centrifugation and the like (U.S. Patent No. 3,856,898).

However, in all of these prior processes, whether by distillation or by solid/liquid separation, small amounts of free sulfur still remain with the product. Such small amounts affect product purity and have adverse effects on subsequent reactions or may result in products which do not meet commercial specifications for the production of commercial insecticides. Furthermore, the handling of solid sulfur residues remaining in the reaction vessel is extremely difficult. Batch distillation processes are required because the amount of sulfur remaining tend to solidify and plug continuous distillation columns. Finally, product losses from the batch vacuum and steam distillation processes are higher than one would like to incur.

The present invention avoids problems of residual sulfur in the distillation feed, eliminates the necessity of batch distillation and permits operation without sulfur precipitation causing problems in a distillation column (although it should be appreciated that the invention is not necessarily limited to continuous distillation processes).

According to the present invention there is provided a process for separating a dialkyl phosphorochloridothioate compound by distillation from a mixture comprising said compound and free sulfur, the alkyl moieties of the dialkyl phosphorochloridothioate compound containing, independently, from one to eight carbon atoms, characterised in that said dialkyl phosphorochloridothioate compound is distilled from said mixture in the presence of at least 0.1 part per part of said compound of high-boiling sulfur-solubilizing agent having a boiling point higher than that of the product dialkyl phosphorochloridothioate and which comprises a liquid aromatic compound having at least ten carbon atoms and selected from alkylated and/or chlorinated naphthalenes and anthracenes, and naphthalene, diphenyl and terphenyls, so as to leave a distillation residue comprising free sulfur and said liquid.

The invention provides in one embodiment a process for preparing and separating a dialkyl phosphorochloridothioate compound in which phosphorus pentasulfide is reacted with an alkanol having from one to eight carbon atoms, chlorination being effected to produce the corresponding dialkyl phosphorochloridothioate compound, by-product sulfur monochloride is converted to free sulfur and a substantial amount of said sulfur is separated from the reaction mixture, characterised in that said dialkyl phosphorochloridothioate compound is distilled in the presence of from 0.1 to 1 part per part of said compound of a high-boiling point liquid having a boiling point higher than that of the product dialkyl phosphorochloridothioate compound comprising an alkyl substituted aromatic hydrocarbon having up to 30 carbon atoms, the aromatic hydrocarbon being an alkyl-substitued naphthalene or anthracene, so as to leave a distillation residue comprising free sulfur and said liquid.

It should be understood that the term "sulfur-solubilizing agent" is used herein as a convenient term for the aromatic compound which retains free sulfur during distillation of the product dialkyl phosphorochloridothioate compound, regardless of whether the sulfur is actually dissolved or merely suspended in the distillation residue.

In general, the process of the present invention can proceed initially as in any of the hereinabove described prior art patent specifications until the step of separation of the product dialkyl phosphorochloridothioate from the reaction mixture after chlorination or sulfur treatment. Accordingly, each of the above-mentioned patent specifications contains process information which can be employed in the performance of the process of the present invention.

One advantage obtainable in the improved process of this invention is that the use of a material less volatile than the product dialkyl phosphorochloridothioate allows the use of a continuous column distillation system (if desired) and provides a bottoms stream which contains all of the waste materials in a fluid or suspended state, allowing the product to be recovered from the overhead system and the waste stream to be easily removed for treatment or recycling. Thus, any lower-boiling impurities may be easily removed from the product, a fraction is obtained containing the product, and any higher-boiling impurities, as well as the sulfur-solubilizing agent, may be removed along with the residual sulfur and sent to waste treatment or solubilizing-agent recovery. More specifically, the crude product mixture from the chlorination and/or sulfur treatment steps normally contains large quantities of the dialkyl phosphorochloridothioate product and impurities such as organic polymer, sulfur and non-volatile salts which remain suspended. In particular, sulfur remains suspended in the high-boiling liquid and is preferably dissolved therein.

The present process is particularly desirable because of the essentially complete recovery of the desired product which is now possible. The polymeric, sulfur and non-volatile impurities are maintained at a sufficiently fluid state such that they are normally dissolved or suspended in the high-boiling aromatic liquid forming a fairly homogeneous phase. Under these conditions, the impurities can be readily removed from column bottoms with the waste stream, leaving column reboilers clean and the waste stream in an easily handled pumpable form. Furthermore, the waste stream is in a form which can be easily handled for efficient disposal or for treatment to recover valuable components such as the high-boiling aromatic liquid. This latter material can be recycled to the distillation process or burned for its fuel value.

The amount of the sulfur-containing agent used in the present process is at least 10 weight percent based on the amount of dialkyl phosphorochloridothioate. The upper limit is limited only by economics and good engineering practice since the greater the amount of sulfur-solubilizing agent used the higher the raw materials cost, processing time and waste disposal or recovery problems. There must be sufficient agent to keep the sulfur from forming a separate solid phase which will foul the process equipment at slightly cooler spots in e.g. pump lines, flow meters, column feed trays and the like. Use of such a sulfur-solubilizing agent provides an additional advantage in that the resultant stream is more dilute which makes the sulfur less likely to give up large quantities of heat sufficient to cause an explosion with resulting damage to equipment, loss of material, and possibly injury to personnel.

A wide variety of high-boiling point, water-immiscible hydrocarbon-type liquids (particularly certain aromatic hydrocarbons) may be employed in the process of this invention, selected from those having at least ten carbon atoms and usually not greater than thirty carbon atoms, such as are listed below. Aromatic hydrocarbon-type compounds as defined earlier in defining the present broad process are by far the most preferred since they give unexpected fluidity of the distillate residue and are usually of low cost and easy availability as by-products, particularly from the petroleum refining industry. The most desirable aromatic hydrocarbons are the naphthalene type, particularly the alkylated naphthalenes, either as pure compounds or as mixtures with benzene derivatives or anthracene derivatives. Typical examples of suitable aromatic hydrocarbons are diphenyl, terphenyl, naphthalene, methylated naphthalenes, and either mono- or polysubstituted anthracene, including the alkyl derivatives of anthracene such as the mono-, di- or higher methyl-substituted anthracenes, ethyl anthracenes and dibutyl anthracenes.

The sulfur-solubilizing agent is most preferably a naphthalenic material such as methyl-naphthalene or mixtures high in naphthalenics such as coal-tar fractions having boiling points above that of the desired products at column pressures, generally above 100°C at 15 mmHg (1999.83 Pa).

In some cases, aromatic hydrocarbons which contain other substitutions, such as halogen substitutions, act similarly to hydrocarbons and can be considered equivalents thereof. Examples of these are the chlorinated naphthalenes.

The particular high-boiling point liquid to be preferred in the performance of this invention depends somewhat upon the product to be recovered. In general, the liquid should have a boiling point as described above 100°C at 15 mmHg (1999.83 Pa). With liquids having lower boiling points, an excessive quantity of liquid is removed with the product and must be separated by fractionation or similar techniques. Higher boiling point liquids do not adequately flush or purge the product from the distillation equipment.

The amount of the high-boiling point water-immiscible liquid can range from 0.1 to e.g. 1 part/part of the dialkyl phosphorochloridothioate compound in the crude reaction mixture, e.g. from 0.1 to 0.5 part/part of said dialkyl thioate compound. A more preferred amount is from 10 to 20 weight percent. In general, it is preferred to use as low a concentration as is possible whilst still maintaining a fluid system under the actual processing conditions. This is particularly true when it is desired to dispose of the fluid residue by burning, using the high-boiling point liquid as a source of fuel. Higher amounts can be used although there is no particular advantage from a processing standpoint and actually greater quantities are disadvantageous, due to reduction of product throughput in the recovery equipment and the increased costs of using and handling greater volumes of material.

The following are typical Examples of the present invention which illustrate the beneficial characteristics of the improved process. All units in the following Examples are given in parts by weight.

Example 1

A crude diethyl phosphorochloridothioate material containing about 5 weight percent sulfur and about 20 weight percent of a mixed naphthalenic oil was fed to a 25 trap Oldershaw column having a one-inch (2.54 cm) diameter. The column was operated at 10 mmHg (1333.22 Pa) absolute overhead pressure, an overhead temperature of 78°C and a bottoms temperature of 145°C. A reflux ratio of 1:1 was used. Good quality diethyl phosphorochloridothioate was recovered from the overhead condenser and the bottoms stream contained only 4—5 weight percent of diethyl phosphorochloridothioate.

Example 2

A crude mixture containing about 76 weight percent diethyl phosphorochloridothioate, 4 weight percent sulfur and 20 weight percent of a mixed naphthalenic oil was fed to a packed glass distillation column 12 feet (365.76 cm) in height and 4 inches (10.16 cm) in diameter. The column was operated at 15 mmHg (1999.83 Pa) absolute overhead pressure at a bottoms temperature of 85°C and bottoms temperature of 128°C. The reflux was 1:1. At these conditions there was recovered approximately 95 weight percent of the diethyl phosphorochloridothioate fed to the column and no detectable sulfur in the product.

Comparative Example

A crude diethyl phosphorochloridothioate, weighing 223.2 g and containing some solid sulfur, was distilled at a pressure of 20 mmHg (2666.44 Pa) take-over distillation at a pot temperature of 96—120°C and head temperature of 91—102°C. The pale yellow distillate weighed 149.5 g and had the following vapor phase analysis with the results given as percent by weight.

| Component | Percent |
| --- | --- |
| (EtO)$_2$POCl* | 1.7 |
| (EtO)$_2$PSCl | 92.3 |
| (EtO)$_3$PS | 0.1 |

*Believed but not certain

The distilled yield was 73.2%.

Preferred operating conditions for continuous column distillation are set by the boiling point of the product dialkyl phosphorochloridothioate at the reduced pressure. For example, overhead temperatures at 15 mmHg (1999.83 Pa) would be 85°C for diethyl phosphorochloridothioate and 64°C for dimethyl phosphorochloridothioate; while typical bottoms temperatures are 124—132°C and 104—113°C for diethyl and dimethyl phosphorochloridothioate, respectively.

From the above Examples, it can be deduced that the use of a sulfur-solubilizing agent of the type mentioned in the process of this invention may aid in the separation of dialyl phosphorochloridothioates from the reaction mixture used in their preparation.

As indicated earlier, the dialkyl phosphorochloridothioate compounds preparable by the process of the invention may be used in the preparation of insecticides, e.g. parathion or methyl parathion. In addition, they may be used in preparing property improvers for lubricants. The invention encompasses such uses.

The invention further includes the use of parathion or methyl parathion, which has been synthesized, respectively, from O,O-diethyl thiophosphoryl chloride. or O,O-dimethyl thiophosphoryl chloride prepared by a process of the invention, as an insecticide.

## Claims

1. A process for separating a dialkyl phosphorochloridothioate compound by distillation from a mixture comprising said compound and free sulfur, the alkyl moieties of the dialkyl phosphorochloridothioate compound containing, independently, from one to eight carbon atoms, characterised in that said dialkyl phosphorochloridothioate compound is distilled from said mixture in the presence of at least 0.1 part per part of said compound of a high-boiling sulfur-solubilizing agent having a boiling point higher than that of the product dialkyl phosphorochloridothioate and which comprises a liquid aromatic compound having at least ten carbon atoms and selected from alkylated and/or chlorinated naphthalenes and anthracenes, and naphthalene, diphenyl and terphenyls, so as to leave a distillation residue comprising free sulfur and said liquid.

2. A process as claimed in claim 1 further characterised in that said sulfur-solubilizing agent is a coal-tar fraction.

3. A process for preparing and separating a dialkyl phosphorochloridothioate compound in which phosphorus pentasulfide is reacted with an alkanol having from one to eight carbon atoms, chlorination being effected to produce the corresponding dialkyl phosphorochloridothioate compound, by-product sulfur monochloride is converted to free sulfur and a substantial amount of said sulfur is separated from the reaction mixture, characterised in that said dialkyl phosphorochloridothioate compound is distilled in the presence of from 0.1 to 1 part per part of said compound of a high-boiling liquid having a boiling point higher than that of the product dialkyl phosphorochloridothioate comprising an alkyl-substituted aromatic hydrocarbon having up to 30 carbon atoms, the aromatic hydrocarbon being an alkyl-substituted naphthalene or anthracene, so as to leave a distillation residue comprising fiee sulfur and said liquid.

4. A process as claimed in claim 3 further characterised in that said dialkyl phosphoro-chloridothioate compound is diethyl phosphoro-

chloridothioate or dimethyl phosphorochlorido-thioate.

5. A process as claimed in claim 3 or claim 4 further characterised in that said liquid comprises an alkyl-substituted naphthalene.

6. A process as claimed in claim 5 further characterised in that said liquid is primarily methylnaphthalene.

7. A process as claimed in claim 3 or claim 4 further characterised in that said liquid is a naphthalenic oil having a boiling point above 100°C at 15 mmHg (1999.83 Pa).

8. A process as claimed in any one of claims 3 to 7 further characterised in that said distillation is carried out in the presence of from 0.1 to 0.5 parts per part of said dialkyl phosphorochloridothioate compound of said liquid.

9. The use of a dialkyl phosphorochloridothioate compound which has been prepared by a process as claimed in any one of claims 1 to 8 in the preparation of either an insecticide or a property improver for a lubricant.

10. The use of parathion or methyl parathion, which has been synthesized, respectively, from O,O-diethyl thiophosphoryl chloride or O,O-dimethyl thiophosphoryl chloride prepared by a process as claimed in any one of claims 1 to 8, as an insecticide.

## Revendications

1. Procédé pour séparer un phosphorochloridothioate de dialkyle par distillation d'un mélange comprenant ledit composé et du soufre libre, les radicaux alkyle du phosphorochloridothioate de dialkyle contenant, indépendamment, 1 à 8 atomes de carbone, caractérisé en ce que ledit phosphorochloridothioate de dialkyle est distillé dudit mélange en présence d'au moins 0,1 partie, par partie dudit composé, d'un agent de solubilisation du soufre à haut point d'ébullition, ayant un point d'ébullition supérieur à celui du phosphorochloridothioate de dialkyle obtenu comme produit en consistant en un composé aromatique liquide ayant au moins 10 atomes de carbone et choisi entre des napthtalènes et des anthracènes alkylés et/ou chlorés et le naphtalène, le diphényle et les terphényles, de manière à laisser un résidu de distillation comprenant du soufre libre et ledit liquide.

2. Procédé suivant la revendication 1, caractérisé en outre en ce que ledit agent de solubilisation du soufre est une fraction de goudron de houille.

3. Procédé de préparation et de séparation d'un phosphorochloridothioate de dialkyle dans lequel du pentasulfure de phosphore est amené à réagir avec un alcanol ayant 1 à 8 atomes de carbone, la chloration étant effectuée de manière à produire le phosphorochloridothioate de dialkyle correspondant, le monochlorure de soufre formé comme sous-produit est converti en soufre libre et une quantité importante dudit soufre est séparée du mélange réactionnel, caractérisé en ce que le phosphorochloridothioate de dialkyle est distillé en présence de 0,1 à 1 partie, par partie dudit composé, d'un liquide de haut point d'ébullition, dont le point d'ébullition est supérieur à celui du phosphorochloridothioate de dialkyle obtenu comme produit, comprenant un hydrocarbure aromatique à substituant alkyle ayant jusqu'à 30 atomes de carbone, l'hydrocarbure aromatique étant un naphtalène ou anthracène à substituant alkyle, de manière à laisser un résidu de distillation comprenant du soufre libre et ledit liquide.

4. Procédé suivant la revendication 3, caractérisé en ce que ledit phosphorochloridothioate de dialkyle est le phosphochloridothioate de diéthyle ou le phosphorochloridothioate de diméthyle.

5. Procédé suivant la revendication 3 ou la revendication 4, caractérisé en outre en ce que ledit liquide comprend un naphtalène à substituant alkyle.

6. Procédé suivant la revendication 5, caractérisé en outre en ce que ledit liquide est principalement le méthylnaphtalène.

7. Procédé suivant la revendication 3 ou la revendication 4, caractérisé en outre en ce que ledit liquide est une huile naphtalénique ayant un point d'ébullition au-dessus de 100°C à 15 mm de mercure (1999,83 Pa).

8. Procédé suivant l'une quelconque des revendications 3 à 7, caractérisé en outre en ce que la distillation est conduite en présence de 0,1 à 0,5 partie dudit liquide par partie dudit phosphorochloridothioate de dialkyle.

9. Utilisation d'un phosphorochloridothioate de dialkyle qui a été préparé par un procédé suivant l'une quelconque des revendication 1 à 8 dans la préparation d'un insecticide ou d'un agent améliorant les propriétés d'un lubrifiant.

10. Utilisation du parathion ou du méthyl-parathion, dont la synthèse a été effectuée respectivement à partir de chlorure de O,O-diéthylthiophosphoryle ou de chlorure de O,O-diméthylthiophosphoryle préparé par un procédé suivant l'une quelconque des revendications 1 à 8, comme insecticide.

## Patentansprüche

1. Verfahren zur destillativen Abtrennung einer Dialkylphosphorchloridthioat-Verbindung aus einem diese Verbindung und freien Schwefel enthaltenden Gemisch, wobei die Alkylanteile der Dialkylphosphorchloridthioat-Verbindung unabhängig voneinander 1 bis 8 Kohlenstoffatome enthalten, dadurch gekennzeichnet, daß die Dialkylphosphorchloridthioat-Verbindung aus diesem Gemisch in Anwesenheit von mindestens 0,1 Teil eines hochsiedenden, Schwefel-solubisierenden Mittels pro Teil der genannten Verbindung abdestilliert wird, dieses Mittel einen Siedepunkt aufweist, der höher ist als der des als Produkt erhaltenen Dialkylphosphorchloridthioats und eine flüssige, aromatische Verbindung enthält, die mindestens 10 Kohlenstoffatome aufweist und ausgewählt ist aus alkylierten und/oder chlorinierten Naphthalinen und Antrazenen, Naphthalin, Diphenyl und Terphenylen, so daß ein Destillationsrückstand aus freiem Schwefel und der genannten Flüssigkeit zurückbleibt.

2. Verfahren nach Anspruch 1, dadurch gekennzeichnet, daß das Schwefelsolubilisierende Mittel eine Kohleteer-Fraktion ist.

3. Verfahren zur Herstellung und Trennung einer Dialkylphosphorchloridthioat-Verbindung, bei dem Phosphorpentasulfid mit einem Alkanol zur Umsetzung gebracht wird, der 1 bis 8 Kohlenstoffatome aufweist, eine Chlorierung durchgeführt wird, um die entsprechende Dialkylphosphorchloridthioat-Verbindung zu bilden, das als Nebenprodukt erhaltene Schwefelmonochlorid in freien Schwefel umgewandelt wird und eine beträchtliche Menge dieses freien Schwefels aus dem Reaktionsgemisch abgetrennt wird, dadurch gekennzeichnet, daß die genannte Dialkylphosphorchloridthioat-Verbindung in Gegenwart von 0,1 bis 1 Teilen einer hochsiedenden Flüssigkeit pro Teil der genannten Verbindung destilliert wird, die einen Siedepunkt aufweist, der höher ist als der des erhaltenen Dialkylphosphorchloridthioats und einen Alkyl-substituierten aromatischen Kohlenwasserstoff mit bis zu 30 Kohlenstoffatomen enthält, wobei der aromatische Kohlenwasserstoff ein Alkyl-substituiertes Naphthalin oder Antrazen ist, so daß ein Destillationsrückstand aus freiem Schwefel und der genannten Flüssigkeit zurückbleibt.

4. Verfahren nach Anspruch 3, dadurch gekennzeichnet, daß die Dialkylphosphorchloridthioat-Verbindung Diäthylphosphorchloridthioat oder Dimethylphosphorchloridthioat ist.

5. Verfahren nach Anspruch 3 oder 4, dadurch gekennzeichnet, daß die genannte Flüssigkeit ein Alkyl-substituiertes Naphthalin enthält.

6. Verfahren nach Anspruch 5, dadurch gekennzeichnet, daß die genannte Flüssigkeit vorwiegend Methylnaphthalin ist.

7. Verfahren nach Anspruch 3 oder 4, dadurch gekennzeichnet, daß die genannte Flüssigkeit ein Naphthalinöl mit einem Siedepunkt oberhalb 100°C (15 mmHg) hat.

8. Verfahren nach einem der Ansprüche 3 bis 7, dadurch gekennzeichnet, daß die Destillation in Anwesenheit von 0,1 bis 0,5 Teilen pro Teil der Dialkylphosphorchloridthioat-Verbindung der genannten Flüssigkeit durchgeführt wird.

9. Verwendung eines nach einem Verfahren der Ansprüche 1 bis 8 erhaltenen Dialkylphosphorchloridthioats zur Herstellung eines Insektizides oder eines Schmiermittel-Additives.

10. Verwendung von Parathion oder Methylparathion, das aus nach einem Verfahren der Ansprüche 1 bis 8 hergestellten o.o.-Diäthylthiophosphorylchlorid bzw. o.o-Dimethylthiophosphorylchlorid erhalten wurde, als Insektizid.